Europäisches Patentamt

European Patent Office

Office européen des brevets

(19)

(11) Veröffentlichungsnummer: **0 001 972**
**B1**

(12) **EUROPÄISCHE PATENTSCHRIFT**

(45) Veröffentlichungstag der Patentschrift: 29.07.81

(51) Int. Cl.³: **C 01 B 21/14**

(21) Anmeldenummer: **78100976.6**

(22) Anmeldetag: **25.09.78**

(54) **Verfahren zur Herstellung von Hydroxylammoniumsalzen in Reaktionsgefässen aus Edelstahl.**

(30) Priorität: **27.09.77 DE 2743297**

(43) Veröffentlichungstag der Anmeldung:
**30.05.79 Patentblatt 79/11**

(45) Bekanntmachung des Hinweises auf die Patenterteilung:
**29.07.81 Patentblatt 81/30**

(84) Benannte Vertragsstaaten:
**BE CH DE FR GB NL**

(56) Entgegenhaltungen:
**DE - A - 2 100 036**
**DE - B - p25 887, V1a/18dD**
**DE - B - 1 914 568**
**DE - C - 843 556**
**DE - C - 896 362**
**DE - C - 968 363**

**STAHL-EISEN-LISTE, 3. Auflage, 1969 Verlag**
**STAHLEISEN, Düsseldorf, Seiten 118—119;**
**Werkstoffnummer: 1.4577 und 1.4578**

(73) Patentinhaber: **BASF Aktiengesellschaft**
**Carl-Bosch-Strasse 38**
**D-6700 Ludwigshafen (DE)**

(72) Erfinder: **Rapp, Guenther, Dr.**
**Mundenheimer Strasse 174**
**D-6700 Ludwigshafen (DE)**
Erfinder: **Jockers, Kurt, Dr.**
**Carl-Bosch-Strasse 72**
**D-6700 Ludwigshafen (DE)**
Erfinder: **Thomas, Erwin**
**Borngasse 12**
**D-6713 Freinsheim (DE)**

Courier Press, Leamington Spa, England.

Verfahren zur Herstellung von Hydroxylammoniumsalzen in Reaktionsgefäßen aus Edelstahl

Gegenstand der Erfindung ist ein Verfahren zur Herstellung von Hydroxylammoniumsalzen durch katalytische Reduktion von Stickstoffmonoxid mit Wasserstoff in verdünnten wäßrigen Mineralsäuren in Gegenwart von suspendierten Platinkatalysatoren bei erhöhter Temperatur unter Verwendung korrosionsfester Werkstoffe.

Bei der Herstellung von Hydroxylammoniumsalzen durch katalytische Reduktion von Stickstoffmonoxid mit Wasserstoff in verdünnten wäßrigen Mineralsäuren in Gegenwart von suspendierten Platinkatalysatoren bei erhöhter Temperatur stellt die Auswahl der für die Vorrichtungen verwendeten Werkstoffe insofern ein Problem dar, als das Reaktionsgemisch äußerst korrosiv ist. Geeignet erwiesen sich Kunststoffe wie Polyvinylchlorid, Polyäthylen, Polypropylen oder Polytetrafluoräthylen, ferner Kunst- und Naturkautschuke. Eine andere Klasse von geeigneten Werkstoffen sind Glas, Emaille oder Graphit sowie Platin oder Tantal. Die Nachteile dieser Werkstoffe bei Verwendung im Reaktorbau sind teils hoher Preis, schwierige Verarbeitbarkeit, teils störende Eigenschaften wie Zerbrechlichkeit, Altersversprödung, Stoß- und Schlagempfindlichkeit, geringe mechanische Festigkeit. Diese Eigenschaften erschweren den Bau von Reaktoren zur Hydroxylammoniumsalz-Herstellung vor allem dann, wenn die Synthese unter Druck ausgeführt werden soll.

Auch eine Reihe von handelsüblichen Stahllegierungen hoher mechanischer Festigkeit und guter Korrionsbeständigkeit haben sich bei der Synthese von Hydroxylamin durch katalytische Reduktion von Stickstoffmonoxid in wäßrigen Mineralsäuren nicht bewährt. Chrom-Nickelstähle, wie der Werkstoff 1.4541 werden sehr stark korrodiert. Andere Chrom-Nickelstähle mit Molybdänzusatz und Kupferzusatz wie der Stahl 1.4505 sind zwar unter normalen Bedingungen beständiger gegen verdünnte Säuren. Durch Korrosion wird auch die Lebensdauer dieser Stähle gemindert. Doch besonders nachteilig ist die ungünstige Beeinflussung des Reaktionsverlaufs durch in Lösung gehende Grundstoffe der Metallegierungen.

Es war deshalb die technische Aufgabe gestellt, Werkstoffe für die Hydroxylaminsynthese zu finden, die praktisch nicht korrodieren, gut bearbeitbar, stoß- und schlagunempfindlich, alterungsbeständig, sowie möglichst wenig aufwendig sind und darüber hinaus hohe mechanische Festigkeit besitzen, um die Reaktion auch unter erhöhtem Druck durchführen zu können.

Diese technische Aufgabe wird gelöst in einem Verfahren zur Herstellung von Hydroxylammoniumsalzen durch katalytische Reduktion von Stickstoffmonoxid mit Wasserstoff in verdünnten wäßrigen Mineralsäuren in Gegenwart von suspendierten Platinkatalysatoren bei erhöhter Temperatur, wobei man die Umsetzung in Reaktionsgefäßen durchführt, deren Wandungen aus an sich bekannten kupferfreien austenitischen Chrom-Nickelstählen bestehen, die einen Gehalt von 16 bis 28 Gew.% Chrom, 20 bis 50 Gew.% Nickel, 1 bis 4 Gew.% Molybdän und höchstens 0,1 Gew.% Kohlenstoff haben und zusätzlich mindestens die 5-fache Menge an Titan, bezogen auf die Kohlenstoffmenge, jedoch nicht mehr als 1,0 Gew-%, oder mindestens die 8-fache Menge an Niob oder Tantal, bezogen auf die Kohlenstoffmenge, jedoch nicht mehr als 1,5 Gew.%, enthalten.

Die erfindungsgemäße Arbeitsweise hat den Vorteil, daß die verwendeten Werkstoffe gegenüber dem Reaktionsmedium eine hervorragende Korrosionsbeständigkeit besitzen und keine den Reaktionsablauf schädigenden Stoffe an das Reaktionsmedium abgeben. Darüber hinaus sind die verwendeten Werkstoffe alterungs-, schlag- und stoßunempfindlich und besitzen eine hervorragende mechanische Festigkeit. Sie lassen sich gut verarbeiten und haben eine lange Lebensdauer.

Bei der Hydroxylaminsynthese geht man in der Regel von einem Gemisch aus Wasserstoff und Stickstoffmonoxid aus, in dem das Molverhältnis von Wasserstoff zu Stickstoffmonoxid mehr als 1, vorzugsweise 1,5 : 1 bis 6 : 1 beträgt. Besonders gute Ergebnisse erhält man, wenn man darauf achtet, daß in der Reaktionszone ein Molverhältnis von Wasserstoff zu Stickstoffmonoxid von 3,5 bis 5 : 1 aufrecht erhalten wird.

Im allgemeinen verwendet man als Säuren nicht reduzierende, starke Mineralsäuren, wie Perchlorsäure, Salpetersäure, Schwefelsäure oder Phosphorsäure. Geeignet sind auch deren saure Salze, wie Ammoniumbisulfat. Besonders bevorzugt wird Schwefelsäure verwendet. In der Regel geht man von 4 bis 6 n wäßrigen Säuren aus und läßt im Verlauf der Reaktion die Säurekonzentration nicht unter 0,2 n abfallen.

Die Umsetzung führt man vorzugsweise bei Temperaturen von 30 bis 80°C durch. Besonders bewährt haben sich Temperaturen von 40 bis 60°C. In der Regel führt man die Umsetzung bei Atmosphärendruck oder erhöhtem Druck, z.B. bis zu 300 bar durch.

Als Platinkatalysatoren werden im allgemeinen Trägerkatalysatoren verwendet. Besonders bewährt hat sich Platin auf Kohleträger, insbesondere auf Graphit. Die Katalysatoren werden in feinverteiltem, d.h. in suspendiertem Zustand, angewendet. Vorzugsweise hat ein solcher Katalysator einen Gehalt von 0,2 bis 5 Gew.% Platin. Vorteilhaft enthalten die Katalysatoren zusätzlich ein oder mehrere Elemente der 5. und/oder 6. Hauptgruppe des Periodischen Systems mit einem Atomgewicht >31, ferner Blei und/oder Quecksilber als vergiftende Mittel. Geeignete Katalysatoren und deren Herstellung werden beispielsweise beschrieben in der DE—AS 10 88 037, DE—PS 920 963, 956 038, 945 752.

Das kennzeichnende Merkmal des Verfahrens ist es, daß die Umsetzung in Reaktionsgefäßen durchgeführt wird, deren Wandungen aus an sich bekannten kupferfreien austenitischen Chrom-Nickelstählen bestehen, die einen Gehalt von 16 bis 28 Gew.% Chrom, 20 bis 50 Gew.% Nickel, 1 bis 4 Gew.% Molybdän und höchstens 0,1 Gew.% Kohlenstoff haben und zusätzlich mindestens die 5-fache Menge an Titan, bezogen auf die Kohlenstoffmenge, jedoch nicht mehr als 1,0 Gew.% oder mindestens die 8-fache Gewichtsmenge an Niob oder Tantal, bezogen auf die Kohlenstoffmenge, jedoch nicht mehr als 1,5 Gew.%, enthalten. Unter kupferfrei ist zu verstehen, daß Kupfer als Legierungsmetall nicht mitverwendet wird. Dies schließt jedoch nicht aus, daß natürliche Mengen an Kupfer in den Stählen enthalten sein können, die bei der Stahlherstellung aus Schrott zwangsläufig eingeschleppt werden. Daneben ist auch nicht auszuschließen, daß andere Elemente, wie sie üblicherweise in Stählen vorkommen, z.B. Mangan oder Silicium, in den Werkstoffen enthalten sind. Besonders bewäht hat sich ein Chrom-Nickel-stahl mit einem Gehalt vcn etwa 25 Gew.% Chrom, 25 Gew.% Nickel, 2,25 Gew.% Molybdän, 0,04 Gew.% Kohlenstoff und 0,5 Gew.% Titan. Es versteht sich, daß der Rest jeweils aus Eisen besteht.

Der verwendete Ausdruck Reaktionsgefäße ist im weitesten Umfang zu verstehen. Er beinhaltet nicht nur Wandungen des eigentlichen Reaktionsgefäßes sondern auch die dazugehörigen Leitungen, Pumpen, Kühler und Rührer. D.H. es sollen sämtliche Wandungen, die mit dem Reaktionsgemisch in Berührung kommen, aus dem erfindungsgemäßen Werkstoff bestehen. Die erfindungsgemäßen Stahllegierungen besitzen alle Vorteile legierter, austenitischer Stähle für den Bau von Vorrichtungen, z.B. Gieß- und Verformbarkeit, gute Bearbeitbarkeit, Verschweißbarkeit, jeweils mit den üblichen Techniken. Die hohe mechanische Festigkeit ermöglicht ihren Einsatz als Werkstoff für Hochdruckreaktoren. Der entscheidende Vorteil liegt neben der Preiswürdigkeit in ihrer hohen Korrosionsbeständigkeit gegenüber dem reduzierenden stark sauren wäßrigen Reaktionsmedium. Es ist überraschend, daß die Hydroxylaminsynthese dann störungsfrei verläuft, nachdem die Gefäßwandungen etwa 200 Stunden dem Angriff des Reaktionsmediums unter Reaktionsbedingungen ausgesetzt wurden. Die so erreichte Passivierung kann bislang durch andere bekannte Passivierungsmittel nicht erreicht werden.

Hydroxylammoniumsalze werden für die Herstellung von Cyclohexanonoxim, einem. Vorprodukt zur Herstellung von Caprolactam, verwendet.

Das Verfahren nach der Erfindung sei in folgenden Beispielen veranschaulicht.

### Beispiel 1

Vier mit Kühleinrichtungen versehene Rührreaktoren aus dem Werkstoff Nr. 1.4577 der Zusammensetzung 25% Ni, 25% Cr, 2,25% Mo, 0,04% C und Schwankenden Titangehalten von 0,22 bis 0,58%, Rest Fe und natürliche Verunreinigungen, werden kommnizierend miteinander verbunden.

Diese vier hintereinandergeschalteten Reaktionsgefäße werden mit je 6 000 1 4,5 n, Schwefelsäure und 150 kg eines 1 Gew.% enthaltenden Platin-Graphit-Katalysators gefüllt. Bei geschlossenen Verbindungsleitungen wird der Inhalt der Reaktionsgefäße mit einem Wasserstoff/Stickstoffmonoxid - Gemische Im Molverhaltnis 1,7 : 1 beaufschlagt, daß sich eine Konzentration an freier Schwefelsäure in den einzelnen Reaktionsgefäßen wie folgt einstellt.

| Reaktor 1 | 3,2 | n |
|-----------|------|---|
| Reaktor 2 | 2,0 | n |
| Reaktor 3 | 0,95 | n |
| Reaktor 4 | 0,3 | n |

Bei nunmehr geöffneten Verbindungsleitungen zwischen den einzelnen Reaktionsgefäßen wird 20 gew.%ige Schwefelsäure zusammen mit Platinkatalysator in den Reaktor 1 eingeführt und durch die Reaktoren zu einer Trennvorrichtung geleitet. Der von der gebildeten Hydroxylammoniumsulfatlösung abgetrennte Katalysator wird in das Reaktionsgefäß 1 zurückgeleitet. Gleichzeitig wird ein Gemisch aus Wasserstoff und Stickstoffmonoxid der genannten Zusammensetzung parallel durch die Reaktoren 4, 3 und 2 geleitet. Die Abgase aus diesen Reaktoren werden gesammelt und gemeinsam durch den Reaktor 1 geführt. Stündlich erhält man so 380 kg Hydroxylamin als Hydroxylammoniumsulfatlösung bei einer Hydroxylaminausbeute von 93,5%, bezogen auf umgesetztes Stickstoffmonoxid.

Nach 17-jährigem Dauerbetrieb zeigen die Reaktorbleche und Apparategußteile aus dem Stahl, der mit Titan in der 5- bis 8-fachen Menge seines C-Gehaltes stabilisiert ist, nur in den wärmebeeinflußten Zonen von Schweißnähten interkristalline Korrosion. Stahlteile mit einer Titanstabilisierung von mehr als dem 10-fachen ihres C-Gehaltes weisen überhaupt keine Mängel auf.

Eine Beeinflussung der Hydroxylaminsynthese durch die Werkstoffe war nach Beendigung der Passivierungsphase nicht zu beobachten.

### Beispiel 2 und Vergleichsbeispiele 1 bis 3 In das erste Reaktionsgefäß werden Probestücke verschiedener Edelstahlsorten eingebracht und diese 8 Monate dem Reaktionsmedium ausgesetzt. Nach Entnahme der Werkstoffe wird ihr jährlicher Oberflächenabtrag aus Einwirkungsdauer und Gewichtsverlust unter Berücksichtigung der exponierten Oberfläche und Dichte ermittelt. Die Ergebnisse sind aus folgender Tabelle ersichtlich.

TABELLE

| Werkstoff | Werkstoff Nr. | C | Cr | Ni | Mo | Cu | Ti | Nb | jährl.Abtrag (mm) |
|---|---|---|---|---|---|---|---|---|---|
| Vergleichsbsp. 1 | 1.4541 | 0,07 | 18 | 10,5 | — | — | 0,45 | — | fast aufgelöst |
| Vergleichsbsp. 2 | 1.4571 | 0,06 | 17,5 | 12 | 2,25 | — | 0;47 | — | 0,12 |
| Vergleichsbsp. 3 | 1.4505 | 0,05 | 18 | 20 | 2,25 | 2,0 | — | 0,63 | 0,47 |
| Beispiel 2 | 1.4577 | 0,04 | 25 | 25 | 2,25 | — | 0,52 | — | 0,03 |

### Vergleichsbeispiel 4

Vergleichsweise wurden im zweiten Reaktor aus Werkstoff Nr. 1.4577 Einbauten aus dem Werkstoff Nr. 1.4571 mit einem Gehalt von 12% Ni, 17,5% Cr. 2,25% Mo, 0,06% C, 0,47% Ti, eingebracht, deren Fläche 2,5% der gesamten exponierten Werkstofffläche in diesem Reaktor betrug. Unter den in Beispiel 1 beschriebenen Reaktonsbedingungen war bei einer Schwefelsäurekonzentration von 1,9 bis 2,1 n nach 14-monatigem Dauerbetrieb am Werkstoff Nr. 1.4571 äußerlich wenig Abtrag erkennbar, doch fiel bei der Hydroxylaminsynthese die Ausbeute an Hydroxylamin um 4,5%, die Ausbeute an unerwünschtem Nebenprodukt stieg um 70% an.

### Beispiel 3

In einem Druckgefäß mit Rührer aus Werkstoff 1.4577 der Zusammensetzung 25% Ni, 25% Cr, 2,25% Mo, 0,03% C, 0,4% Ti, Rest Fe, werden 200 g eines Platin-Grafit-Katalysators mit einem Platingehalt von 0,5 Gew.% in 5 l 4,1 n-Schwefelsäure suspendiert. Bei einem Druck von 9 bar abs. leitet man unter Rühren eine gemessene Menge NO und $H_2$ im Volumen-Verhältnis 37 : 63 in den Reaktor ein, den man durch Kühlen auf einer Temperatur von 40°C hält. Nicht umgesetzte Gase, die über ein Druckhalteventil entweichen, werden gemessen und analysiert. Nach Abfallen der Schwefelsäurekonzentration auf etwa 0,4 n beendet man die Reaktion, entspannt, trennt die Hydroxylaminlösung vom Katalysator ab und bestimmt die gebildete Menge Hydroxylamin. Die Ausbeute an Hydroxylamin beträgt 91,5%, bezogen auf umgesetztes No. Der Werkstoff zeigt nach 29 Versuchsansätzen unter Druck und nach vorherigen etwa 100 drucklos durchgeführten Ansätzen keine Korrosionserscheinigungen. Die Ansätze bei Atmosphärendruck wurden zur Passivierung des Werkstoffs durchgeführt.

### Vergleichsbeispiel 5

Man verfährt wie in Beispiel 3 beschrieben. Vergleichsweise bildete sich in einem Reaktor aus dem Werkstoff Hastelloy [R] B2 mit einem Gehalt an 71,0% Nickel und 28,4% Molybdän, unter den geschilderten Reaktionsbedingungen, aber auch bei druckloser Fahrweise, fast kein Hydroxylamin. Der Werkstoff zeigte nach 5 Versuchsansätzen deutliche Korrosionserscheinungen.

### Patentanspruch

Verfahren zur Herstellung von Hydroxylammoniumsalzen durch katalytische Reduktion von Stickstoffmonoxid mit Wasserstoff in verdünnten wäßrigen Mineralsäuren in Gegenwart von suspendierten Platinkatalysatoren bei erhöhter Temperaur, dadurch gekennzeichnet, daß man die Umsetzung in Reaktionsgefäßen durchführt, deren Wandungen aus an sich bekannten kupferfreien austenitischen molybdänhaltigen Chrom-Nickelstählen bestehen, die einen Gehalt von 16 bis 28 Gew. % Chrom, 20 bis 50 Gew.% Nickel, 1 bis 4 Gew.% Molybdän, höchstens 0,1 Gew.% Kohlenstoff haben und zusätzlich mindestens die 5-fache Menge an Titan, bezogen auf die Kohlenstoffmenge, jedoch nicht mehr als 1,0 Gew.% oder Mindestens die 8-fache Menge an Niob oder Tantal, bezogen auf die Kohlenstoffmenge, jedoch nicht mehr als 1,5 Gew.% enthalten, wobei der Rest, abgeschen von eventuellen Verunreinigungen, aus Eisen besteht.

### Revendication

Procédé de préparation de sels d'hydroxylammonium par réduction catalytique de bioxyde d'azote (NO) avec de l'hydrogène dans des acides minéraux aqueux dilués, en présence de catalyseurs de platine en suspension, à température élevée, caractérisé par le fait que l'on effectue la réaction dans des récipients de réaction dont les parois sont en aciers chrome-nickel austénitiques contenant du molybdène et pas de cuivre, connus en soi, et qui ont une teneur de 16 à 28% en poids de chrome, 20 à 50% de nickel, 1 à 4% de molybdène, au maximum 0,1% en poids de carbone, et qui contiennent en outre au moins le quintuple en titane rapporté à la quantité de carbone, mais toutefois pas plus que 1% en poids, ou bien au moins l'octuple en niobium ou tantale rapporté à la teneur en carbone, mais toutefois pas plus que 1,5% en poids de niobium ou de tantale, le reste étant constitué de fer, compte non tenu d'éventuelles impuretés.

### Claim

A process for the manufacture of hydroxylammonium salts by catalytic reduction of nitric oxide with hydrogen in a dilute aqueous mineral acid in the presence of a suspended platinum catalyst at an elevated temperature, characterized in that the reaction is carried out in vessels of which the walls consist of conventional copper-free molybdenum-containing austenitic chromium-nickel steels which contain from 16 to 28% by weight of chromium, from 20 to 50% by weight of nickel, from 1 to 4% by weight of molybdenum and at most 0.1% by weight of carbon and which in addition contain an amount of titanium which is at least 5 times the amount of carbon but is not more than 1.0% by weight, or an amount of niobium or tantalum which is at least 8 times the amount of carbon but is not more than 1.5% by weight, the balance, apart from any impurities present, consisting of iron.